# EUROPEAN PATENT APPLICATION

(11) **EP 3 755 000 A1**
(43) Date of publication of application: **23.12.2020**
(21) Application number: 18910950.7
(22) Date of filing: 20.03.2018
(51) Int. Cl.: H04Q 9/00

(54) **ACCESS POINT, TERMINAL, INFORMATION GATHERING SYSTEM, AND INFORMATION GATHERING METHOD**

(71) Applicant: Mitsubishi Electric Corporation, Tokyo 100-8310 (JP)
(72) Inventor: OGA, Masao, Tokyo 100-8310 (JP); TAKE, Keijiro, Tokyo 100-8310 (JP)
(74) Representative: Plasseraud IP
(86) International application number: PCT/JP2018/011126
(87) International publication number: WO 2019/180835

(57) **Abstract**

An access point (10) according to the present invention is an access point that receives first information measured by a sensor from a terminal and transmits the first information as sensor information to a server, the access point including: a measurement result estimator (1041) that estimates an estimation result that is information indicating an estimated value of the first information and is information to be used by the terminal to determine whether to transmit the first information; a communicator (100) that transmits the estimation result to the terminal; and a wide area interface (102) that transmits the estimation result as the sensor information to the server in a case where the first information is not received from the terminal for a certain period of time or longer after transmission of the estimation result to the terminal.

## Description

### Field

The present invention relates to an access point that performs wireless communication, a terminal equipped with a sensor, an information collection system, and an information collection method to be applied to the information collection system.

### Background

In recent years, attention has been paid to information collection systems that collect environmental information from various sensors that measure, for example: the aging of social infrastructure such as roads, bridges, tunnels, and water and sewage systems; or damage caused by natural disasters; or the operating status of production facilities such as factories. The information collection system includes an access point and a terminal equipped with a sensor, and uses environmental information to detect an anomaly or to estimate a value that the environmental information can take. The access point collects environmental information from the terminal by using wireless communication. The terminal obtains environmental information by using the sensor. When the information collection system performs highly accurate detection or estimation, the access point needs to collect environmental information from the terminal with high frequency. The degree of freedom in installing the terminal is improved by use of wireless communication. Meanwhile, it is often difficult to supply power to the terminal. Therefore, the terminal includes a battery, and operates the sensor and each functional unit by using the battery. If the frequency of collecting environmental information from the terminal is increased, power consumption of the terminal increases and the battery drains more quickly. Thus, the operating time of the terminal is reduced.

Patent Literature 1 discloses an information collection system in which a management server that controls sensors operates as follows. The management server calculates remaining time during which a terminal equipped with a sensor can be driven, by using remaining battery life of the terminal. The management server controls measurement time of the sensor provided in the terminal, the number of times a report is made, output power of wireless communication, and the like become equal to the remaining time during which the terminal can be driven.

### Citation List

### Patent Literature

Patent Literature 1: Japanese Patent Application Laid-open No. 2003-115092

### Summary

### Technical Problem

However, the information collection system described in Patent Literature 1 has a problem in that the frequency of communication with the management server does not decrease in the entire terminal, and therefore power to be consumed by communication between the entire terminal and the management server cannot be reduced.

The present invention has been made in view of the above, and an object of the present invention is to obtain an access point that reduces power consumption of a terminal that transmits a value detected by a sensor.

### Solution to Problem

To solve the above problems and achieve the object an access point according to the present invention receives first information measured by a sensor from a terminal and transmits the first information as sensor information to a server. The access point includes: a measurement result estimator to estimate an estimation result that is information indicating an estimated value of the first information and is information to be used by the terminal to determine whether to transmit the first information; a first communicator to transmit the estimation result to the terminal; and a second communicator to transmit the estimation result as the sensor information to the server in a case where the first information is not received from the terminal for a certain period of time or longer after transmission of the estimation result to the terminal.

### Advantageous Effects of Invention

An access point according to the present invention reduces power consumption of a terminal that transmits a value detected by a sensor. The present invention achieves an effect of enabling such an access point to be obtained.

### Brief Description of Drawings

FIG. 1 is a diagram illustrating a configuration example of an information collection system according to an embodiment.
FIG. 2 is a diagram illustrating an example in which an access point according to the embodiment distributes programs.
FIG. 3 is a functional block diagram of the access point according to the embodiment.
FIG. 4 is a functional block diagram of a sensor-equipped terminal according to the embodiment.
FIG. 5 is a diagram illustrating a control circuit according to the embodiment.
FIG. 6 is a sequence diagram illustrating an example of a procedure for distributing a program to the sensor-equipped terminal according to the embodiment.
FIG. 7 is a diagram illustrating information to be included in measurement error estimation parameters according to the embodiment.
FIG. 8 is a sequence diagram illustrating an example of estimation of a result of sensor measurement according to the embodiment.
FIG. 9 is a diagram illustrating a configuration example of an estimation result according to the embodiment.
FIG. 10 is a sequence diagram illustrating another example of estimation of the result of sensor measurement according to the embodiment.
FIG. 11 is a diagram illustrating examples of environmental information to be transmitted to the access point by the sensor-equipped terminal according to the embodiment.

### Description of Embodiments

An access point, a terminal, an information collection system, and an information collection method according to an embodiment of the present invention will be described below in detail with reference to the drawings. Note that the present invention is not limited to the embodiment.

### Embodiment.

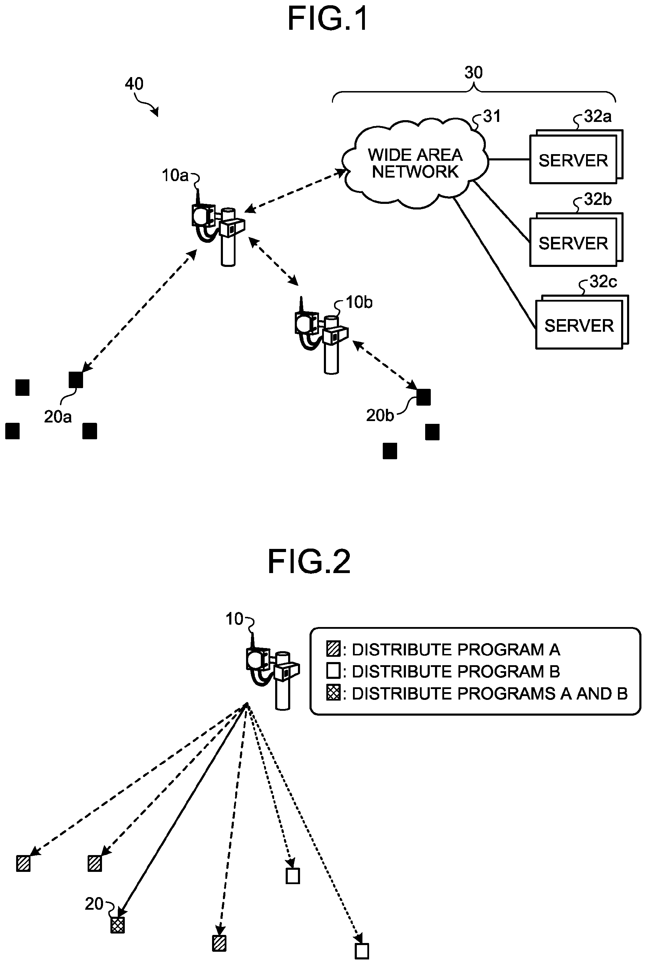

FIG. 1 is a diagram illustrating a configuration example of an information collection system according to the embodiment. An information collection system 40 includes an access point 10a, an access point 10b, a sensor-equipped terminal 20a, a sensor-equipped terminal 20b, a server 32a, a server 32b, and a server 32c. The access point 10a communicates with the servers 32a, 32b, and 32c via a wide area network 31. Furthermore, the access point 10a communicates with the sensor-equipped terminal 20a and the access point 10b. The access point 10b communicates with the sensor-equipped terminal 20b and the access point 10a. The access point 10b is located at a place where the access point 10b cannot be directly connected to the wide area network 31. The access point 10b can communicate with the server 32a, the server 32b, and the server 32c via the access point 10a. The access point 10a and the access point 10b are collectively referred to as access points 10 when described without distinction. The sensor-equipped terminal 20a and the sensor-equipped terminal 20b are collectively referred to as sensor-equipped terminals 20 when described without distinction. The sensor-equipped terminal 20 is also referred to as a terminal. The servers 32a, 32b, and 32c are collectively referred to as servers 32 when described without distinction. Note that the information collection system 40 will be described on the premise that the information collection system 40 communicates by using a specific low-power wireless network such as wireless smart utility network (Wi-SUN) using the 920 MHz band. However, the information collection system 40 is not limited to a system using a specific low-power wireless network.

The access point 10 performs wireless communication with the sensor-equipped terminal 20. In addition, the access point 10 is connected to the server 32 via the wide area network 31. The access point 10 communicates with a wide area communication network 30 that includes the wide area network 31 and the server 32 by using a method such as a wide area network (WAN), which is a wired connection, wideband-code division multiple access (W-CDMA), which is used in a mobile phone, or long term evolution (LTE).

The sensor-equipped terminal 20a and the sensor-equipped terminal 20b obtain environmental information. The environmental information refers to information on, for example, the acceleration of an object, the temperature of an object, and soil moisture. Upon obtaining the environmental information, the sensor-equipped terminal 20a and the sensor-equipped terminal 20b transmit the environmental information to the access point 10a and the access point 10b, respectively. The access points 10 transmit the environmental information obtained by the sensor-equipped terminal 20a and the sensor-equipped terminal 20b to the wide area network 31 by using a wide area communication means such as a mobile phone. The environmental information: is transmitted via the wide area network 31 to the server 32a, the server 32b, and the server 32c, which provide services; and is accumulated therein. Examples of the services to be provided by the servers 32 include detecting an event according to purpose such as risk prediction by using environmental information and distributing the detected event to users. The environmental information is also referred to as first information. In addition, the environmental information is also referred to as sensor information.

The wide area network 31 is connected to the access point 10a. Processing relating to, for example, control of line connection between the access point 10a and the wide area network 31 and security are provided by a communication method supported by the wide area network 31. A wired line is mainly used for communication between the wide area network 31 and the server 32, and an internet protocol (IP) network is configured by use of a plurality of routers, optical lines, and the like. Note that communication using the IP as a communication protocol will be described as an example of communication via the wide area network 31. However, a communication protocol to be used in the communication via the wide area network 31 is not limited to the IP.

The server 32 accumulates the environmental information obtained by the sensor-equipped terminal 20. In addition, the server 32 provides service. Furthermore, the server 32 distributes programs related to the operations of the access point 10 and the sensor-equipped terminal 20. Moreover, the server 32 provides settings for the access point 10 and the sensor-equipped terminal 20. Furthermore, the server 32 has the function of monitoring the states of the access point 10 and the sensor-equipped terminal 20, and also has the function of displaying the obtained environmental information on a console screen or the like. Note that the number of the servers 32 is not limited to three, and four or more servers 32 may be provided in the information collection system 40 according to purpose. In addition, each server 32 can select the sensor-equipped terminal 20 from which environmental information is to be obtained and a sensor. Furthermore, the servers 32 can share the obtained environmental information among the servers 32. In addition, the servers 32 can separately cause software to operate on the sensor-equipped terminal 20 and the access point 10 in parallel. However, the servers 32 are not limited to devices having these functions.

FIG. 2 is a diagram illustrating an example in which the access point 10 according to the embodiment distributes programs. The access point 10 distributes, to the sensor-equipped terminals 20, a program for determining a cycle in which environmental information is obtained from the sensor and a program for determining a trigger for transmitting the environmental information to the access point 10. Execution of these programs enables the access point 10 and the sensor-equipped terminal 20 to, for example, transmit and receive environmental information. The sensor-equipped terminal 20 includes, for example, a general-purpose device such as an electronic computer. Furthermore, the number of programs that can be executed by the sensor-equipped terminal 20 is not limited to one, and a plurality of programs may be executed depending on intended use such as the type of sensor. In FIG. 2, program A is a program for, for example, obtaining environmental information from a sensor that measures the acceleration of an object. Program B is a program for, for example, obtaining environmental information from a sensor that measures soil moisture and the like.

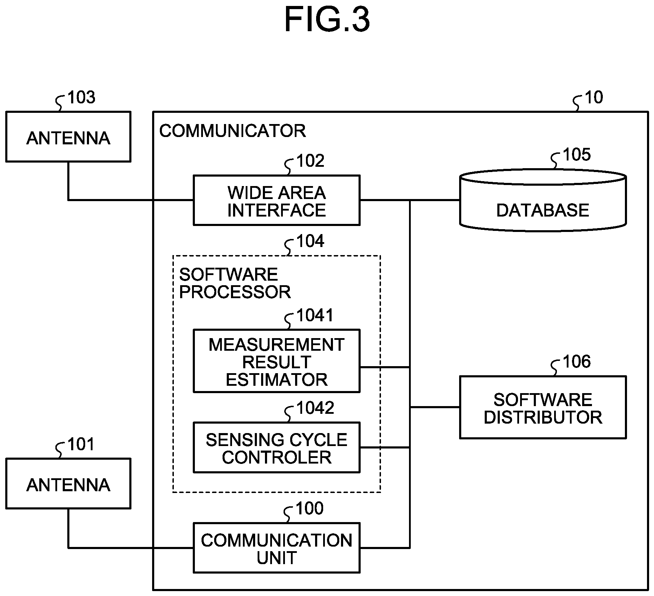

FIG. 3 is a functional block diagram of the access point 10 according to the embodiment. The access point 10 includes a communicator 100, an antenna 101, a wide area interface 102, an antenna 103, a software processor 104, a database 105, and a software distributor 106.

The communicator 100 has: a wireless interface (IF) function for transmitting and receiving signals for communication with another access point 10 and the sensor-equipped terminal 20; and a modem function for performing control for wireless connection with the another access point 10 and the sensor-equipped terminal 20. The communicator 100 is also referred to as a first communicator. The antenna 101 communicates with the other access point 10 and the sensor-equipped terminal 20. The wide area interface 102 communicates with the wide area communication network 30, and relays environmental information received from the sensor-equipped terminal 20 to the wide area communication network 30. The wide area interface 102 is also referred to as a second communicator. Note that in the case where communication between the access points 10 is performed by a method different from a method of communication between the sensor-equipped terminal 20 and the access point 10, another communicator 100 adopting the different communication method may be newly added. The antenna 103 communicates with the wide area communication network 30. The software processor 104 collects environmental information transmitted from the other access point 10 or the sensor-equipped terminal 20. In addition, the software processor 104 includes a measurement result estimator 1041 and a sensing cycle controller 1042.

The measurement result estimator 1041 estimates an estimation result indicating an estimated value based on the assumption that the environmental information transmitted from the sensor-equipped terminal 20 falls within a certain error range. Furthermore, the measurement result estimator 1041 broadcasts the estimation result to the sensor-equipped terminals 20. The sensing cycle controller 1042 controls the acquisition cycle of the environmental information by a sensor 201 included in the sensor-equipped terminal 20. Furthermore, the sensing cycle controller 1042 specifies and manages a report determination cycle corresponding to a time interval between transmission of environmental information from the sensor-equipped terminal 20 to the access point 10. The report determination cycle is also referred to as a first cycle. In the case where environmental information is not received from the sensor-equipped terminal 20 at the transmission time specified by the sensing cycle controller 1042, the sensing cycle controller 1042 provides the server 32 with a proxy report of the result of estimation of environmental information made by the measurement result estimator 1041, as the result of measurement performed by the sensor-equipped terminal 20.

The database 105 stores: operational information on the sensor-equipped terminal 20; a program necessary for operation of the software processor 104; setting information such as parameters of wireless communication necessary for communication between the communicator 100 and the wide area interface 102; and a sensor-equipped terminal program to be downloaded to the sensor-equipped terminal 20. The software distributor 106 causes the sensor-equipped terminal 20 to download the sensor-equipped terminal program stored in the database 105. Information that associates the sensor-equipped terminal 20 with the sensor-equipped terminal program is registered in the operational information on the sensor-equipped terminal 20, stored in the database 105. Note that a configuration example in which the wide area interface 102 is included in the access point 10 is described in the present embodiment. Meanwhile, the wide area interface 102 may be provided outside the access point 10 to serve the function of connection with the wide area communication network 30.

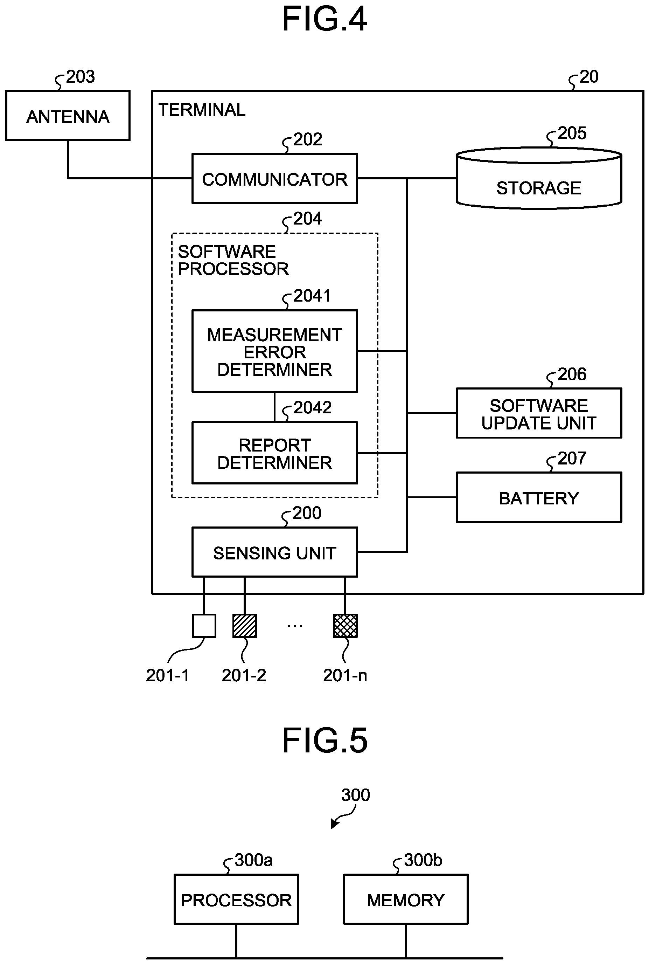

FIG. 4 is a functional block diagram of the sensor-equipped terminal 20 according to the embodiment. The sensor-equipped terminal 20 includes: a sensing unit 200; sensors 201-1 to 201-n; a communicator 202; an antenna 203; a software processor 204; a storage 205; a software update unit 206; and a battery 207. Note that when the sensors 201-1 to 201-n are not distinguished, the sensors 201-1 to 201-n are collectively referred to as the sensors 201.

The sensing unit 200 sets parameters of the sensors 201, and controls the sensors 201. In addition, the sensing unit 200 obtains environmental information from the sensors 201. Note that an acceleration sensor to be used for a clinometer or the like and a thermometer are taken as examples in describing the sensors 201 in the present embodiment. However, the sensors 201 are not limited to these sensors. The communicator 202 has a wireless IF function for transmitting and receiving signals for wireless communication with the access point 10 and a modem function for performing control for wireless connection with the access point 10. The antenna 203 communicates with the access point 10. The software processor 204 performs a process of collecting environmental information from the sensors 201, a process of transmitting the environmental information obtained from the sensors 201 to the access point 10, and a power saving process. In addition, the software processor 204 includes a measurement error determiner 2041 and a report determiner 2042.

The measurement error determiner 2041 estimates an error in the result of estimation by the measurement result estimator 1041 by using the environmental information obtained from the sensors 201. The report determiner 2042 determines whether it is necessary to transmit the environmental information to the access point 10, based on the error estimated by the measurement error determiner 2041. When the error in the result of estimation by the measurement error determiner 2041 falls within a certain error range, the report determiner 2042 does not transmit the environmental information to the access point 10. This achieves power saving of the battery 207 and prevention of use of a band for unnecessary wireless transmission. Meanwhile, when the error estimated by the measurement error determiner 2041 does not fall within the certain error range or when no estimation result has been delivered from the access point 10, the report determiner 2042 transmits the environmental information to the communicator 100 so as to correct the estimation result.

The storage 205 stores, for example: a program for the process of collecting environmental information; a program for the process of transmitting the environmental information obtained from the sensors 201 to the access point 10; a program relating to the power saving process; and setting information such as wireless parameters necessary for the communicator 202 in performing communication. The programs stored in the storage 205 are read out when the sensor-equipped terminal 20 is started. The program for the process of collecting environmental information is also referred to as a first program. Furthermore, the storage 205 temporarily stores the environmental information that the sensing unit 200 has obtained from the sensors 201. The software update unit 206 updates a program stored in the storage 205 such that the stored program is changed to a program to be uploaded by the software distributor 106 of the access point 10 illustrated in FIG. 3. The software update unit 206 makes a diagnosis of the program stored in the storage 205. When it is determined that the distribution source and the like are normal, the software update unit 206 deploys the program in the software processor 204, and activates the software. The battery 207 supplies power to each functional unit of the sensor-equipped terminal 20. Note that the battery 207 may be supplied with power from a solar power generation device installed outside the sensor-equipped terminal 20, during a power failure.

The software processor 104, the software distributor 106, the software processor 204, and the software update unit 206 are implemented by a processing circuitry as an electronic circuit that performs each process.

The present processing circuitry may be dedicated hardware or a control circuit including a memory and a central processing unit (CPU) that executes a program stored in the memory. Here, the memory corresponds to, for example, a nonvolatile or volatile semiconductor memory, such as a random access memory (RAM), a read only memory (ROM), or a flash memory, a magnetic disk, or an optical disk. In the case where the present processing circuitry is a control circuit including a CPU, the control circuit is exemplified by a control circuit 300 with a configuration illustrated in FIG. 5.

As illustrated in FIG. 5, the control circuit 300 includes a processor 300a, which is a CPU, and a memory 300b. In the case where the software processor 104, the software distributor 106, the software processor 204, and the software update unit 206 are implemented by the control circuit 300 illustrated in FIG. 5, these units are implemented by the processor 300a reading and executing a program corresponding to each process, stored in the memory 300b. In addition, the memory 300b is also used as a temporary memory in each process to be performed by the processor 300a.

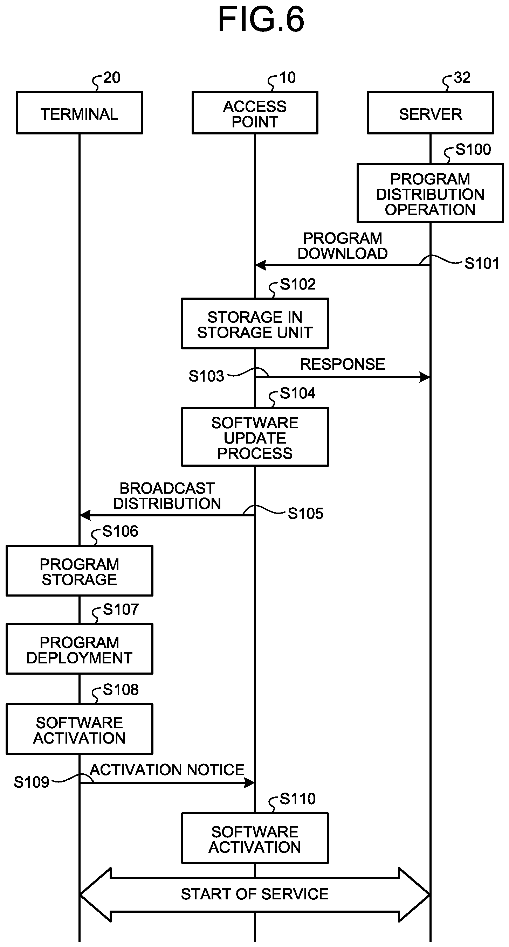

FIG. 6 is a sequence diagram illustrating an example of a procedure for distributing a program to the sensor-equipped terminal according to the embodiment. The first program is created via the console screen or the like of the server 32. The server 32 performs an operation of program distribution (step S100). As a result, the first program is distributed to the access point 10 (step S101). Upon receiving the first program from the server 32, the access point 10 stores the first program in the database 105 (step S102). After the first program is stored in the database 105, the software distributor 106 makes a response to the server 32 to notify the server 32 of completion of storage (step S103). The first program is provided with information that enables identification of the sensor-equipped terminals 20 that should receive the first program, such as a list of device IDs of the sensor-equipped terminals 20 to which the program is to be distributed. The software distributor 106 starts a process of updating software for the sensor-equipped terminals 20 included in the device ID list (step S104), and broadcasts the first program to the sensor-equipped terminals 20 (step S105).

After receiving the first program distributed from the access point 10, the sensor-equipped terminal 20 stores the first program in the storage 205 (step S106). The software update unit 206 makes a diagnosis of the program stored in the storage 205. When it is determined that the distribution source and the like are normal, the software update unit 206 deploys the program in the software processor 204 (step S107), activates the software (step S108), and notifies the software distributor 106 that the software has been activated (step S109). Upon receiving the notification of completion of software activation, the software distributor 106 deploys, in the software processor 104, the program that is stored in the database 105 and necessary for operation of the software processor 104, and starts to provide service (step S110).

When the software activation is completed in step S110, the access point 10 periodically broadcasts, to the sensor-equipped terminals 20, measurement error estimation parameters 400 to be used by the measurement result estimator 1041.

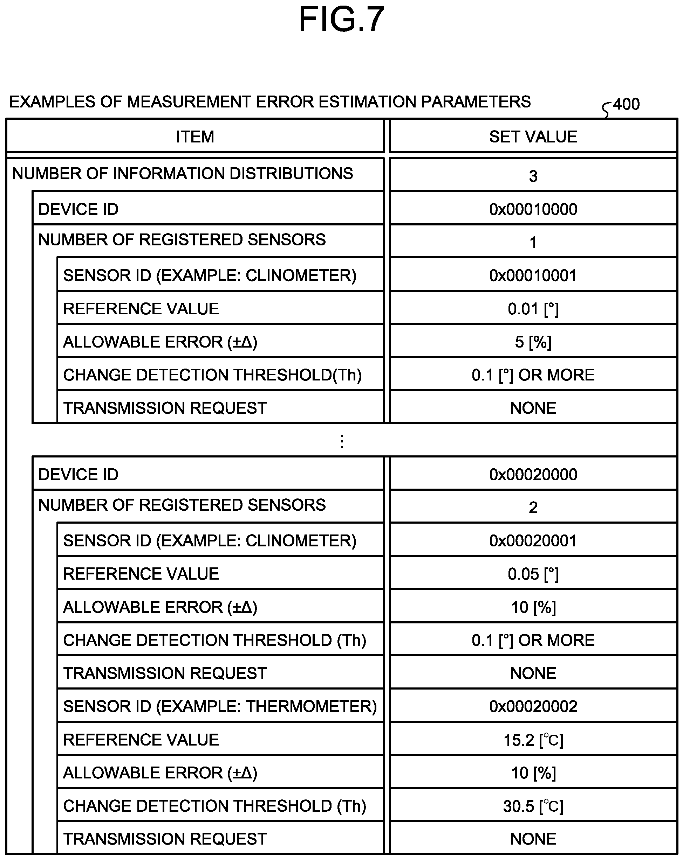

FIG. 7 is a diagram illustrating information to be included in the measurement error estimation parameters 400 according to the embodiment. The measurement error estimation parameters 400 include the number of information distributions, a device ID, the number of registered sensors, a sensor ID, a reference value, an allowable error, a change detection threshold, and a transmission request.

The number of information distributions refers to the number of the sensor-equipped terminals 20. The device ID refers to an ID for identifying the sensor-equipped terminal 20. The number of registered sensors refers to the number of sensors connected to the sensor-equipped terminal 20. The sensor ID refers to an ID for identifying each sensor (clinometer, thermometer, and the like) connected to the sensor-equipped terminal 20. The reference value refers to a value to be used for estimating an error in environmental information obtained from each sensor connected to the sensor-equipped terminal 20. Furthermore, the reference value corresponds to an average value of past environmental information obtained from the sensor-equipped terminal 20. When the sensor-equipped terminal 20 newly obtains environmental information, the reference value is updated by use of the new environmental information. In addition, when the access point 10 receives environmental information from the sensor-equipped terminal 20, the reference value is automatically updated by use of the environmental information received by the access point 10. The allowable error refers to a value to be used to evaluate whether the result of error estimation performed by the sensor-equipped terminal 20 falls within an allowable range. The change detection threshold refers to a value for determining whether environmental information obtained from the sensor 201 indicates that an anomaly has been detected. The transmission request refers to a request to be made by the access point 10 when the access point 10 requests the sensor-equipped terminal 20 to transmit environmental information.

When environmental information obtained from the sensor 201 is equal to or higher than the change detection threshold, or when the access point 10 has made a transmission request, the sensor-equipped terminal 20 transmits the environmental information to the access point 10 regardless of the result of estimation by the measurement error determiner 2041. For example, when the result of measurement by the clinometer is 0.1 degrees or more in a sensor with a sensor ID of 0x00010001 connected to a sensor-equipped terminal with a device ID of 0x00010000 as illustrated in the measurement error estimation parameters 400 of FIG. 7, the report determiner 2042 transmits the environmental information to the access point 10 regardless of the estimation result. Note that described is an example of transmitting environmental information obtained from the sensor 201 to the access point 10 when the environmental information is equal to or higher than the change detection threshold. However, environmental information may be transmitted to the access point 10 when the environmental information is equal to or lower than the change detection threshold. Note that each initial value of the measurement error estimation parameters 400 is set when a program is created via the console screen or the like of the server 32. Furthermore, each value of the measurement error estimation parameters 400 can be set and updated via the console screen or the like of the server 32.

Moreover, description is provided in the present embodiment, based on the assumption that the measurement error estimation parameters 400 correspond to values to be used for error estimation. However, the present invention is not limited to the measurement error estimation parameters 400, and other values may be used for error estimation as long as the values are parameters necessary for estimating an error of an estimation result, corresponding to a difference between the estimation result and environmental information. Furthermore, the measurement error estimation parameters 400 include numerical values designated as parameters necessary for error estimation. However, the parameters may be expressed by computational expressions or the like. In addition, the parameter necessary for error estimation may be information associated with time information or year/month information. Furthermore, the time or year/month information of the sensor-equipped terminal 20 may be used for error estimation. Moreover, a parameter related to, for example, sunshine conditions depending on the weather and the like, or seasons may also be used as the parameter necessary for error estimation.

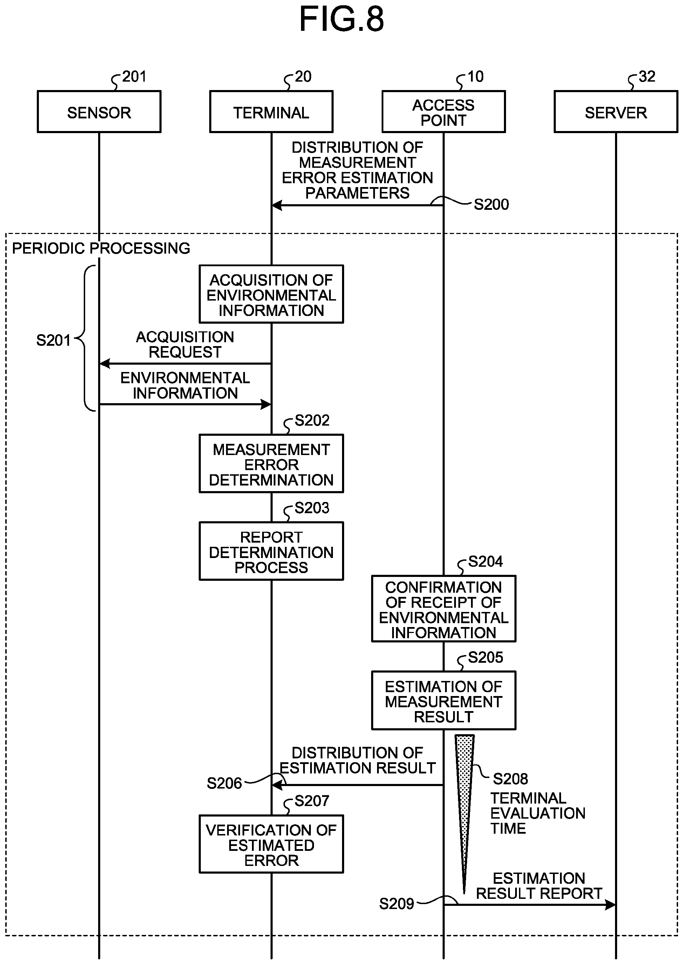

FIG. 8 is a sequence diagram illustrating an example of estimation of a result of sensor measurement according to the embodiment. A series of processes illustrated in FIG. 8 is referred to as a measurement result estimation process. When the activation of software is completed by the procedure of FIG. 6, the access point 10 periodically broadcasts the measurement error estimation parameters 400 to the sensor-equipped terminals 20 (step S200). Upon receiving the measurement error estimation parameters 400, the measurement error determiner 2041 stores the measurement error estimation parameters 400 in the storage 205. The sensing unit 200 obtains environmental information from the sensors 201 when the acquisition cycle is reached (step S201). The measurement error determiner 2041 receives the environmental information from the sensing unit 200. Furthermore, the measurement error determiner 2041 determines whether the environmental information obtained by the sensing unit 200 falls within an error range by using the reference value and the allowable error (±Δ) included in the measurement error estimation parameters 400, and notifies the report determiner 2042 of the result of determination (step S202). When the determination result indicates that the environmental information falls within the allowable error range, the report determiner 2042 determines that there is no problem with the measurement result estimation by the measurement result estimator 1041, and does not transmit the environmental information to the access point 10 (step S203). Note that when the determination result indicates that the environmental information is out of the allowable error range, the report determiner 2042 determines that there is a problem with the measurement result estimation by the measurement result estimator 1041, and transmits the environmental information to the access point 10.

The sensing cycle controller 1042 manages the environmental information acquisition cycle and report determination cycle of the sensor-equipped terminal 20, and generates an acquisition trigger to obtain environmental information, regardless of whether environmental information has been received from the sensor-equipped terminal 20. The acquisition trigger refers to a signal that causes the measurement result estimator 1041 to obtain environmental information. When the sensing cycle controller 1042 notifies the measurement result estimator 1041 of the acquisition trigger to obtain environmental information, the measurement result estimator 1041 confirms whether new environmental information has been received from the sensor-equipped terminal 20 (step S204). When the measurement result estimator 1041 has received no environmental information, the measurement result estimator 1041 uses the reference value included in the measurement error estimation parameters 400 as an estimation result (step S205), and broadcasts the estimation result to the sensor-equipped terminals 20 (step S206). When the measurement result estimator 1041 has received the environmental information, the measurement result estimator 1041 transmits the environmental information received from the sensor-equipped terminal 20, as a measurement result to the server 32 without performing the measurement result estimation process. Note that a case where the measurement result estimator 1041 receives no environmental information will be described in the embodiment. Details of the environmental information and the measurement result to be transmitted by the sensor-equipped terminal 20 will be described below.

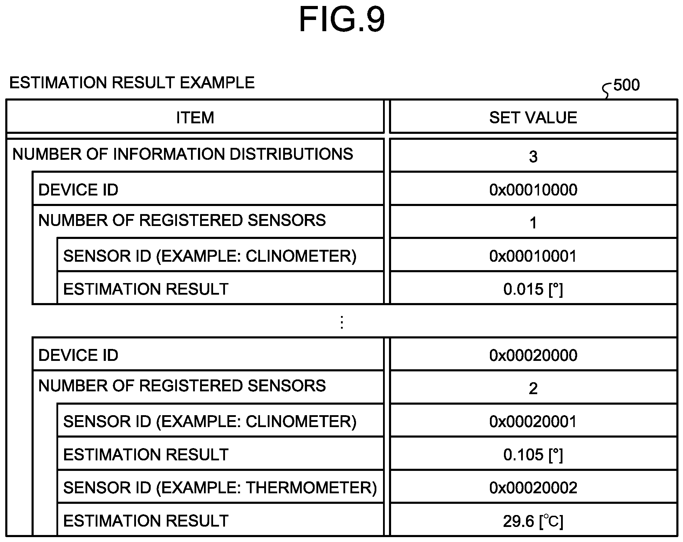

FIG. 9 is a diagram illustrating a configuration example of an estimation result according to the embodiment. An estimation result 500 contains the number of information distributions, a device ID, the number of registered sensors, a sensor ID, and an estimation result. The functions of the number of information distributions, the device ID, the number of registered sensors, and the sensor ID are the same as functions of the measurement error estimation parameters 400. The estimation result refers to a value obtained by the measurement result estimator 1041 in estimation of a measurement result corresponding to a sensor ID.

Description is provided in the present embodiment by use of the configuration example of the estimation result 500. However, an estimation result to be distributed by the measurement result estimator 1041 is not limited to the estimation result 500 with the configuration example illustrated in FIG. 9. The measurement error determiner 2041 uses an estimation result received from the access point 10 to perform verification of an estimated error so as to verify whether the estimation result falls within the error range of environmental information obtained by the sensing unit 200 (step S207). When it is confirmed, as a result of the verification, that the estimation result of the access point 10 falls within the allowable error range, the measurement error determiner 2041 completes the process. After distribution of the estimation result, the measurement result estimator 1041 waits for a terminal evaluation time to elapse so as to determine whether there is a response from the sensor-equipped terminal 20 (step S208). The terminal evaluation time refers to time to be managed by the measurement result estimator 1041, and corresponds to waiting time for a response from the center-equipped terminal 20, regarding the estimation result distributed in step S206. The terminal evaluation time is set in consideration of a delay in transmission by the center-equipped terminal 20, and the like. After the terminal evaluation time has elapsed, the measurement result estimator 1041 determines that the estimation result indicates a normal value, in the case where the response has not been received from the sensor-equipped terminal 20. Thus, the measurement result estimator 1041 provides the server 32 with a proxy report of the estimation result as the result of measurement of environmental information (step S209).

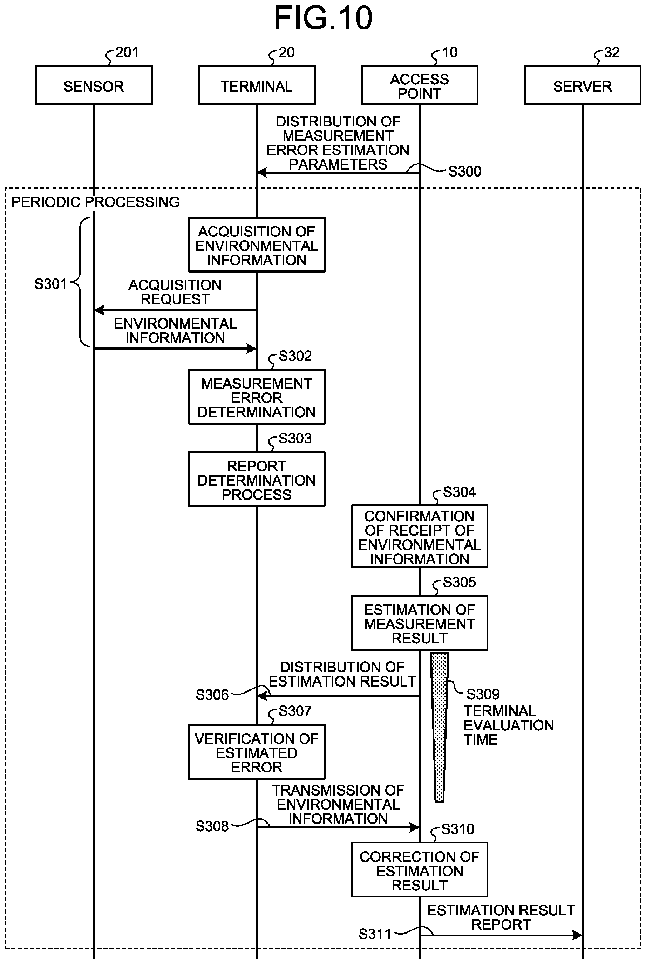

FIG. 10 is a sequence diagram illustrating another example of estimation of the result of sensor measurement according to the embodiment. The process steps from step S300 to step S306 are the same as the operation described in step S200 to step S206 of FIG. 8, respectively.

The measurement error determiner 2041 performs verification of an estimated error of the estimation result received from the access point 10, corresponding to a difference between the estimation result and the environmental information obtained from the sensing unit 200 (step S307). In the case where, as a result of verification of the estimated error, the measurement error determiner 2041 determines that the result of estimation by the access point 10 exceeds an allowable error range, the report determiner 2042 transmits the environmental information obtained from the sensor 201 and stored in the storage 205 to the access point 10 so as to correct the result of estimation by the access point 10 (step S308).

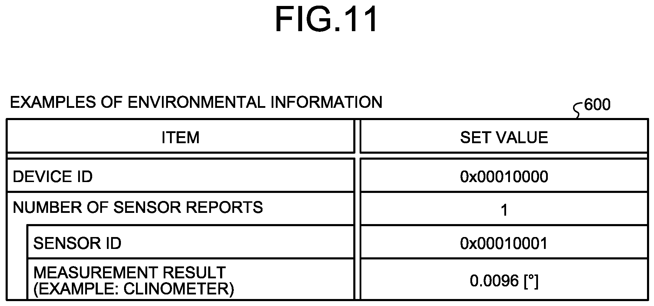

FIG. 11 is a diagram illustrating examples of environmental information to be transmitted to the access point 10 by the sensor-equipped terminal 20 according to the embodiment. Environmental information 600 includes a device ID, the number of sensor reports, a sensor ID, and a measurement result. The functions of the device ID and the sensor ID are the same as the functions of the device ID and the sensor ID included in the measurement error estimation parameters 400. The number of sensor reports refers to the number of pieces of environmental information that the sensor-equipped terminal 20 reports to the access point 10. The measurement result refers to the value of environmental information obtained from the sensor 201. Upon receiving environmental information, the measurement result estimator 1041 stops the process of waiting for the terminal evaluation time to elapse (step S309). Furthermore, the measurement result estimator 1041 corrects the estimation result such that the estimation result is changed to the environmental information received from the sensor-equipped terminal 20, and updates the reference value included in the measurement error estimation parameters 400 stored in the database 105 (step S310). After that, the measurement result estimator 1041 reports, to the server 32, the corrected estimation result as the result of measurement of the environmental information (step S311).

Only in the case where an error of the result of estimation by the access point 10, corresponding to a difference between the result of estimation and the environmental information measured by the sensor-equipped terminal 20 is out of the allowable range, the sensor-equipped terminal 20 can transmit the environmental information. Therefore, it is possible to reduce wireless transmission processing that requires more power consumption while maintaining the accuracy of environmental information that the access point 10 reports to the server 32 and reducing a band to be used for wireless communication. Note that in the case where the result of estimation by the access point 10 is frequently corrected based on environmental information of a plurality of the sensors 201 in step S310, the sensor-equipped terminal 20 may determine whether the estimation result falls within the allowable error range by assigning a degree of priority to each environmental information obtained from the plurality of sensors 201 and using only environmental information with high priority in the sensor-equipped terminal 20. Thus, it is possible to prevent an estimation result from being corrected based on environmental information with low priority, and to use a wireless communication band for transmitting environmental information with high priority.

As described above, according to the present embodiment, the access point 10 has the function of estimating environmental information and the function of providing a proxy report to the server 32. The sensor-equipped terminal 20 has the function of verifying the result of estimation by the access point 10 and the function of correcting the result of estimation by the access point 10. Therefore, it is possible to reduce a band to be used by the sensor-equipped terminal 20 for wireless communication, achieve power saving of the sensor-equipped terminal 20, and improve the accuracy of environmental information to be transmitted to the server 32.

The configuration described in the above embodiment illustrates an example of the subject matter of the present invention, and it is possible to combine the configuration with another technique that is publicly known, and is also possible to make omissions and changes to part of the configuration without departing from the gist of the present invention.

### Reference Signs List

10, 10a, 10b access point; 20, 20a, 20b sensor-equipped terminal; 30 wide area communication network; 31 wide area network; 32, 32a, 32b, 32c server; 40 information collection system; 100, 202 communicator; 101, 103, 203 antenna; 102 wide area interface; 104, 204 software processor; 105 database; 106 software distributor; 200 sensing unit; 201, 201-1 to 201-n sensor; 205 storage; 206 software update unit; 207 battery; 300 control circuit; 300a processor; 300b memory; 400 measurement error estimation parameter; 500 estimation result; 600 environmental information; 1041 measurement result estimator; 1042 sensing cycle controller; 2041 measurement error determiner; 2042 report determiner.

## Claims

1. An access point that receives first information measured by a sensor from a terminal and transmits the first information as sensor information to a server, the access point comprising:
a measurement result estimator to estimate an estimation result that is information indicating an estimated value of the first information and is information to be used by the terminal to determine whether to transmit the first information;
a first communicator to transmit the estimation result to the terminal; and
a second communicator to transmit the estimation result as the sensor information to the server in a case where the first information is not received from the terminal for a certain period of time or longer after transmission of the estimation result to the terminal.

2. The access point according to claim 1, further comprising:
a sensing cycle controller to manage a first cycle that is a cycle in which whether the first information has been received from the terminal is determined, wherein
the measurement result estimator transmits the estimation result to the server in a case where the first information is not received during the first cycle after transmission of the estimation result, and the measurement result estimator transmits the first information as the estimation result to the server in a case where the first information is received during the first cycle after the transmission of the estimation result.

3. The access point according to claim 1 or 2, further comprising:
a software distributor to distribute, to the terminal, a program that causes the terminal to determine whether to transmit the first information, wherein
the program does not cause the terminal to transmit the first information in a case where an error of the estimation result, corresponding to a difference between the estimation result and the first information, falls within an allowable range.

4. A terminal that can communicate with an access point, the terminal comprising:
a sensor to measure an object; and
a measurement error determiner to determine whether an error of information on estimation of first information that is information measured by the sensor falls within an allowable range, the error corresponding to a difference between the first information and the information on the estimation of the first information, the information on the estimation of the first information being transmitted from the access point.

5. The terminal according to claim 4, further comprising:
a report determiner to transmit the first information to the access point in a case where the error does not fall within the allowable range, and not to transmit the first information to the access point in a case where the error falls within the allowable range.

6. An information collection system comprising:
the access point according to any one of claims 1 to 3, to estimate first information that is information measured by a sensor;
the terminal according to claim 4 or 5, to obtain the first information by using the sensor; and
a server to collect the first information.

7. An information collection method to be performed in an information collection system including an access point to receive first information measured by a sensor from a terminal and transmit the first information as sensor information to a server, a terminal to obtain the first information, and a server to collect the first information, the method comprising:
a first step of causing the access point to estimate an estimation result that is information indicating an estimated value of the first information and is information to be used by the terminal to determine whether to transmit the first information;
a second step of causing the access point to transmit the estimation result to the terminal;
a third step of causing the access point to transmit the estimation result as the sensor information to the server in a case where the first information is not received from the terminal for a certain period of time or longer after transmission of the estimation result to the terminal; and
a fourth step of causing the terminal to determine whether an error of the estimation result, corresponding to a difference between the first information and the estimation result, falls within an allowable range.

8. The information collection method according to claim 7, further comprising:
a fifth step of causing the access point to manage a first cycle that is a cycle in which whether the first information has been received from the terminal is determined; and
a sixth step of causing the terminal to transmit the first information to the access point in a case where the error does not fall within the allowable range, and not causing the terminal to transmit the first information to the access point in a case where the error falls within the allowable range, wherein
the first step includes causing the access point to transmit the estimation result to the server in a case where the first information is not received during the first cycle after transmission of the estimation result, and to transmit the first information as the estimation result to the server in a case where the first information is received during the first cycle after the transmission of the estimation result.
